# FASCICULE DE BREVET EUROPEEN

(11) **EP 1 259 837 B1**
(45) Date de publication et mention de la délivrance du brevet: **16.08.2006**
(21) Numéro de dépôt: 01909910.0
(22) Date de dépôt: 27.02.2001
(51) Int. Cl.: G01V 15/00

(54) **SYSTEME ET PROCEDE D'AUTHENTIFICATION D'ARTICLES MANUFACTURES MUNIS DE MARQUAGES MAGNETIQUES**
SYSTEM UND VERFAHREN ZUR ARTIKELIDENTIFIZIERUNG MIT HILFE MAGNETISHAKTIVER MARKIERUNG
SYSTEM AND METHOD FOR AUTHENTICATING MANUFACTURED ARTICLES PROVIDED WITH MAGNETIC MARKINGS

(30) Priorité: 29.02.2000 FR 0002541
(43) Date de publication de la demande: 27.11.2002
(73) Titulaire: COMMISSARIAT A L'ENERGIE ATOMIQUE, 75752 Paris Cédex 15 (FR)
(72) Inventeur: ACHER, Olivier, F-37260 MONTS (FR); JOUBERT, Jean-Claude, 38610 Gie res (FR)
(74) Mandataire: Brykman, Georges
(86) Numéro de dépôt international: PCT/FR2001/000566
(87) Numéro de publication internationale: WO 2001/065283

(56) Documents cités:
- EP-A- 0 383 059
- WO-A-97/24734
- WO-A-98/36393
- FR-A- 2 711 246
- FR-A- 2 779 266
- US-A- 4 581 524
- US-A- 5 532 598

## Description

### Domaine technique

La présente invention concerne un système d'authentification d'articles manufacturés munis de marquages magnétiques et un procédé de marquage de tels articles. Le domaine de l'invention est notamment celui de la détection de contrefaçon pour des articles textiles ou des articles de maroquinerie. Mais ce peut être aussi celui de la détection d'étiquettes autocollantes sur tout objet (bidon, bouteille de vin...).

### Etat de la technique antérieure

La contrefaçon constitue un mal qui affecte grandement l'industrie des produits manufacturés, et en particulier l'industrie du luxe. Un certain nombre de moyens : marques visuelles, gravure des produits... ont été développés pour permettre d'authentifier les produits originaux.

Mais, dans le domaine des articles en textile ou de maroquinerie, l'introduction d'une marque visuelle (hologramme, gravure laser,...) nécessite un déballage de l'article et un examen visuel minutieux pour détecter le marquage. De plus, un marquage qui n'est pas intégré dans l'article ne permet pas d'authentifier l'article une fois qu'il est en usage, débarrassé de ses étiquettes et de son emballage.

Il est également possible de réaliser un marquage magnétique à l'aide d'un matériau doux. En effet, un élément allongé en matériau de ce type, lorsqu'il est soumis à un champ magnétique alternatif suffisant pour atteindre la saturation, génère des harmoniques que l'on peut détecter. Il est également possible de détecter un signal haute fréquence émis lors du renversement de l'aimantation d'un matériau magnétique lors de l'application d'un champ magnétique extérieur (effet Barkhausen), cet effet étant observé uniquement sur des matériaux magnétiques ayant un cycle d'hystérésis présentant une forte rémanence et un champ coercitif faible.

Comme décrit dans le document référencé [1] en fin de description, l'emploi de filaments ferromagnétiques pour réaliser un tel marquage est connu. Cette technique est utilisée dans de nombreux dispositifs de surveillance électronique (EAS), tels que ceux décrits dans le document référencé [2]. Dans le domaine de la surveillance électronique, la détection d'un article se fait de manière non coopérative : le matériau magnétique doux doit pouvoir être détecté sans que son porteur ne s'astreigne à faciliter la détection par un portique de détection. Un tel portique peut être constitué d'antennes de détection qui contrôlent une zone d'interrogation de section importante, de façon à pouvoir détecter une zone suffisante, en sortie de caisse par exemple, ou en sortie de magasin.

Par contre, une telle détection magnétique coopérative, dans laquelle un individu, qui dispose d'un dispositif de détection de la présence de matériau magnétique doux, cherche effectivement à vérifier l'existence de marqueurs magnétiques incorporés dans un objet, n'a donné lieu qu'à peu de développements. De tels développements concernent des systèmes d'identification individuelle d'objets, comme des badges d'accès, comme décrit dans les documents référencés [3] et [4]. Ces systèmes sont caractérisés d'une part par un fonctionnement reposant sur une détection spatiale précise d'une pluralité d'éléments magnétique séparés, et d'autre part par la présence sur l'objet d'un code permettant la comparaison des informations issues de cette détection, et de ce code pour certifier l'identité du produit. Il importe de faire la différence entre ces systèmes, que l'on qualifiera de systèmes d'identification, dans la mesure où ils servent à s'assurer de l'identité d'un objet unique, et le système d'authentification selon l'invention, qui sert à s'assurer de l'authenticité de la provenance.

Dans les dispositifs de l'art antérieur, des fils ferromagnétiques sont parfois employés. Lorsqu'il s'agit de surveillance électronique, leur diamètre dépasse communément 100 µm. Dans les systèmes de surveillance électronique, il est en effet nécessaire d'avoir une quantité de matière suffisante pour permettre une détection dans une région d'interrogation assez importante (de l'ordre de 1 m3). De plus, la valeur du champ magnétique alternatif auquel est soumis le public devant être faible, les fils doivent pouvoir répondre à un champ faible, typiquement inférieur à 80 A/m.

Le document référencé [8] décrit un procédé et un capteur de détection à distance d'objets utilisé dans un but de surveillance électronique. Ce procédé se distingue de l'art antérieur en ce qu'il utilise, à des fins de détection, une propriété physique des métaux amorphes ou nanocristallins, la variabilité de la perméabilité magnétique avec le champ magnétique appliqué dans la direction longitudinale de l'élément. La détection est alors effectuée non plus, comme dans l'art antérieur, avec un seul champ magnétique, mais avec un champ magnétique et un champ électromagnétique ; un champ électromagnétique d'interrogation longue portée et un champ de modulation, dit champ magnétique variable, à courte portée.

L'invention a pour objet de réaliser un marquage magnétique, d'articles manufacturés, par exemple textiles, ou de maroquinerie, qui présente l'avantage d'être invisible, d'être intégré au moment de la fabrication, et de rester présent tout au long de la vie de ces articles ; Un système de détection portable et d'encombrement limité permettant alors de s'assurer de la présence ou non du marquage magnétique, sans qu'il soit nécessaire de procéder à un examen attentif du produit ou à son déballage.

### Exposé de l'invention

L'invention concerne un système d'authentification d'articles manufacturés munis de marquages magnétiques, au moyen d'un dispositif de détection de tels marquages, dans lequel chaque marquage comprend au moins un filament ferromagnétique amorphe, le nombre n de ces filaments étant par exemple inférieur à 10, de diamètre inférieur à 20 µm muni d'une gaine de verre d'épaisseur inférieure à 10 µm. Le dispositif de détection est un dispositif portable de détection de tels filaments ferromagnétiques et en ce que le ou les filaments ferromagnétiques présentent un champ de saturation d'au moins 320 A/m.

Ces filaments ont par exemple une longueur comprise entre 1 cm et 10 cm.

Le dispositif portable a une zone de détection d'un volume compris entre 10-3 dm3 et 1 dm3. Le ou les filaments ont une masse totale ne dépassant pas 1 mg. Avantageusement, les filaments comportent entre 18 et 35% de Si+B, du Cobalt ou du Fer à plus de 40% et éventuellement du Nickel (<10%), et des matériaux tels que : Mo, Zr, Ge, Cr, Mn, V, Ti, C avec des teneurs inférieures à 7%.

Les fils peuvent avoir une magnétostriction négative, ou positive.

La présente invention concerne également un procédé de marquage d'un article manufacturé caractérisé en ce que l'on intègre au moins un filament ferromagnétique amorphe de diamètre inférieur à 20 µm muni d'une gaine de verre d'épaisseur inférieure à 10 µm et présentant un champ de saturation d'au moins 320 A/m dans une zone de cet article, de manière à permettre l'authentification de celui-ci au moyen d'un dispositif de détection.

Les filaments peuvent être assemblés par tissage, ou piquage. Ces filaments peuvent être insérés dans une étiquette textile, dans un logo textile, ou plus généralement dans une partie textile prédéterminée de l'article. Les filaments peuvent être insérés par des procédés de couture, piqûre, broderie ou au moment du tissage du tissu. On peut incorporer les filaments dans un fil textile, qui peut ensuite être utilisé lors de la réalisation du tissu (en tant que certains fils de chaîne ou de trame), ou utilisés pour des opérations de couture ou de broderie, ou de surpiqûre (en particulier pour la maroquinerie).

Avantageusement l'authentification est effectuée à au plus quelques centimètres de l'article manufacturé.

L'invention se démarque clairement des systèmes de l'art antérieur, notamment pour les raisons suivantes :
- Le dispositif de détection de l'invention présente un volume d'interrogation qui n'est ni celui, important, des systèmes de surveillance électronique, ni celui, très faible, des systèmes d'identification, qui nécessitent une localisation précise (de l'ordre du mm) de plusieurs marqueurs magnétiques juxtaposés dans un arrangement précis les uns par rapport aux autres.
- La réponse magnétique de l'article marqué assure qu'il n'y a pas détection au moyen des portiques de détection antivol (soit la quantité de matière est trop faible pour assurer la détection à distance, soit le champ de saturation du matériau est trop fort pour que l'on observe une non linéarité significative dans la zone d'interrogation).
- Chaque filament magnétique est inséré dans l'article textile durant le procédé de fabrication, ou incorporé dans l'étiquette ou le logo de la marque, ou dans l'étiquette comportant les recommandations d'entretien. Il est conçu pour faire partie intégrante de l'article durant toute sa vie, dans des conditions d'utilisation normale, contrairement aux marqueurs de surveillance électronique qui doivent soit être désactivés, soit retirés, mais qui de toute manière deviennent inutiles ou potentiellement porteurs de fausses alarmes après la sortie du magasin.
- La gaine de verre enrobant chaque filament magnétique est utile pour protéger le matériau magnétique contre la corrosion par l'oxydation durant la vie de l'article, et en particulier lors de lavages et de nettoyages à sec.
- Chaque filament ferromagnétique identifiant est invisible à l'oeil nu ; il n'est donc pas nécessaire de le masquer.
- Chaque filament ferromagnétique est flexible, confortable, et n'apporte aucune contrainte d'utilisation particulière à un textile.
- Chaque filament ferromagnétique est intégré dans l'article considéré par un procédé textile (tissage, brodage, piquage,...) et non, comme dans le cas de la surveillance électronique par un procédé de type collage, assemblage, ..., ou comme dans la fabrication de badge par un procédé plasturgique.
- Par rapport à des marques visuelles, le procédé selon l'invention présente l'avantage de ne pas nécessiter d'examen visuel approfondi par les personnes en charge du contrôle, qui peuvent être, par exemple, des douaniers.
- Ce procédé selon l'invention ne nécessite pas non plus de manipulation destinée à rendre visible une étiquette ou une marque de contrôle, dans la mesure où le dispositif d'authentification est capable de réaliser une détection dans un volume limité (de 10⁻³ dm³ à 1 dm³), mais suffisant pour ne pas nécessiter de déplier l'article textile ou de séparer des articles disposés en piles.

### Description des figures

Les figures 1 et 2 illustrent le système de l'invention.
La figure 3 illustre des cycles d'hystérésis de filaments magnétiques utilisés dans un premier exemple de réalisation.
La figure 4 illustre une antenne utilisée dans un second exemple de réalisation.

### Exposé détaillé de modes de réalisation

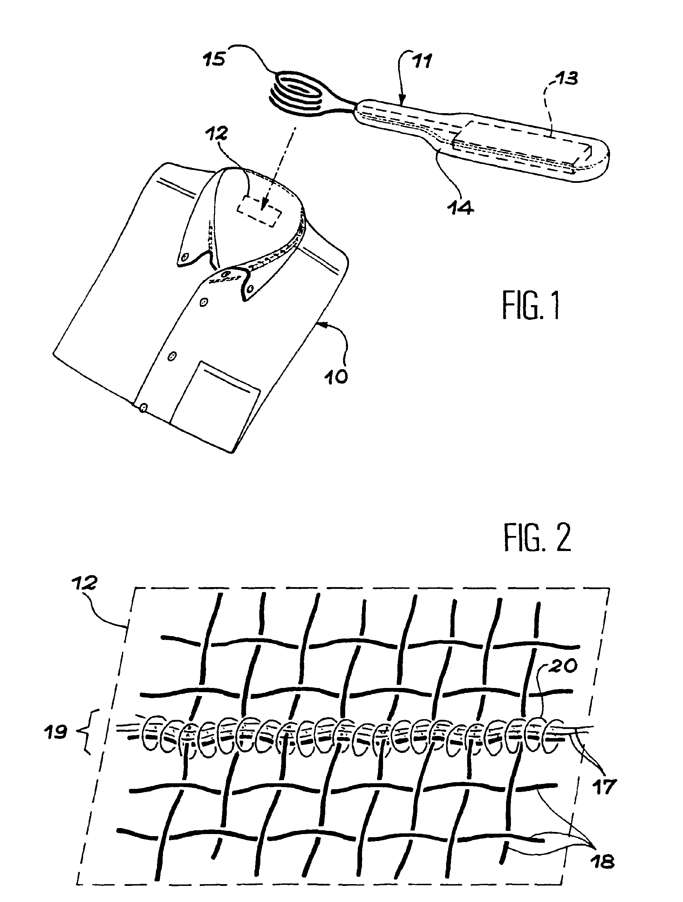

Comme illustré sur la figure 1, l'invention consiste à authentifier un article manufacturé 10, par exemple un article textile ou un article de maroquinerie, ici une chemise, au moyen d'un dispositif 11 de détection de marquages électromagnétiques insérés dans une zone prédéterminée 12 dudit article 10. Sur la figure ledit dispositif est représenté schématiquement avec un boîtier d'excitation-détection 13, contenu dans une poignée 14 et une antenne d'excitation-détection 15 reliée à celui-ci.

Un nombre limité de n filaments ferromagnétiques 17 (n ≤ 10) de diamètre très faible (inférieur à 20 µm) gainés de verre (épaisseur du verre inférieure à 10 µm), est intégré dans cette zone 12 permettant l'authentification de l'article 10 au moyen du dispositif de détection. La longueur préférentielle de ces filaments est comprise entre 1 cm et 10 cm.

Ces filaments peuvent être soit séparés, soit assemblés (par tressage, guipage,...). Ces filaments peuvent être insérés dans une étiquette textile, dans un logo textile, ou plus généralement dans une partie textile prédéterminée de l'article manufacturé. Tout article manufacturé comprenant au moins une partie de tissu, une couture (comme un bracelet de montre, ou un article de maroquinerie), une broderie peut facilement être marquée. Les filaments sont invisibles à l'oeil nu, tout particulièrement lorsqu'ils sont mélangés aux filaments textiles.

Sur la figure 2, les filaments ferromagnétiques 17 sont assemblés avec un fil 18 de la trame du tissu pour former à l'aide d'un fil de guipe 20, un fil composite guipé 19.

Ces filaments très fins peuvent être soit insérés par des procédés de couture, piqûre, broderie, soit insérés au moment du tissage du tissu.

Pour faciliter la manipulation de ces filaments en nombre limité, on peut les incorporer dans un fil textile, qui est ensuite utilisé lors de la réalisation d'un tissu (en tant que certains fils de chaîne ou de trame), ou utilisé pour des opérations de couture ou de broderie, ou de surpiqûre (en particulier pour la maroquinerie).

Ces filaments ferromagnétiques fins gainés de verre peuvent être produits par étirage d'un noyau de métal fondu contenu dans un tube en verre borosilicate comme décrit dans le document référencé [5]. Ils peuvent avoir une des compositions suivantes : CoFeSiB, CoSiB, FeSiB, avec une proportion de Si+B supérieure à 18% et inférieure à 35% de façon à avoir un matériau amorphe, et du Co et du Fe à plus de 40%. On peut rajouter à ces constituants principaux des éléments tels que : Ni (de 0 à 20%), Mo, Zr, Ge, Cr, Mn, V, Ti, C ou d'autres métaux ou métalloïdes avec des teneurs inférieures à 7%.

Ces filaments ferromagnétiques peuvent être à magnétostriction positive, auquel cas ils présentent un saut de Barkhausen important, ou bien à magnétostriction négative, auquel cas ils ne présentent pas de saut de Barkhausen. Les propriétés de tels matériaux, fonction de leur composition, sont bien connues, comme décrit dans le document référencé [6].

La réalisation de fils textiles contenant des filaments ferromagnétiques pour réaliser des tissus a déjà été envisagée dans le document référencé [7], dans une perspective totalement différente, qui conduisait à utiliser une quantité de fils magnétiques relativement importante, et des fils de longueurs significatives ; et qui ne considérait pas la réalisation de broderies, coutures, articles de maroquinerie.

Les quantités de matière mises en jeu dans la présente invention, ainsi que leurs caractéristiques, assurent d'une part la possibilité de détection des filaments magnétiques doux à l'aide d'un système de détection d'harmonique à courte portée, mais assurent aussi que ces matériaux ne seront pas détectés par les portiques de surveillance des magasins. Ces filaments sont, en effet, destinés à rester sur les articles manufacturés, et ne doivent donc pas être détectés par les portiques de surveillance électronique dans lequel le porteur de l'article textile pourrait être amené à passer. Pour ce faire, on peut notamment :
- limiter la quantité des filaments ferromagnétiques, en n'excédant pas un volume de 10 cm x 1000 µm² = 0,1 mm³, c'est-à-dire une masse de filaments ferromagnétiques inférieure à 1 mg,
- augmenter le champ de saturation d'un filament, au delà des valeurs utilisées dans les portiques de surveillance électronique. Les normes internationales fixant la valeur maximale autorisée du champ subi par les individus à 80 A/m environ, on peut prendre un champ de saturation qui est au moins le quadruple de cette valeur. Le champ de saturation ne doit toutefois pas excéder 1700 A/m dans le volume exploré, afin de ne pas compliquer la détection coopérative, et pour éviter que des signaux provenant d'objets métalliques avoisinants ne perturbent le signal. Un dispositif de détection tenu à la main, qui crée un champ magnétique dans le volume de détection mais n'expose pas l'opérateur à des valeurs de champ excessives, est très simple à mettre au point pour un homme de métier,
- sophistiquer la détection en utilisant les propriétés particulières des filaments ferromagnétiques gainés de verre lorsqu'ils sont disposés côte à côte. Leurs interactions entraînent une modification de leur cycle d'hystérésis, qui peut se traduire par une modification du signal réémis suite à une excitation liée à l'application d'un champ.

### Exemples de réalisation

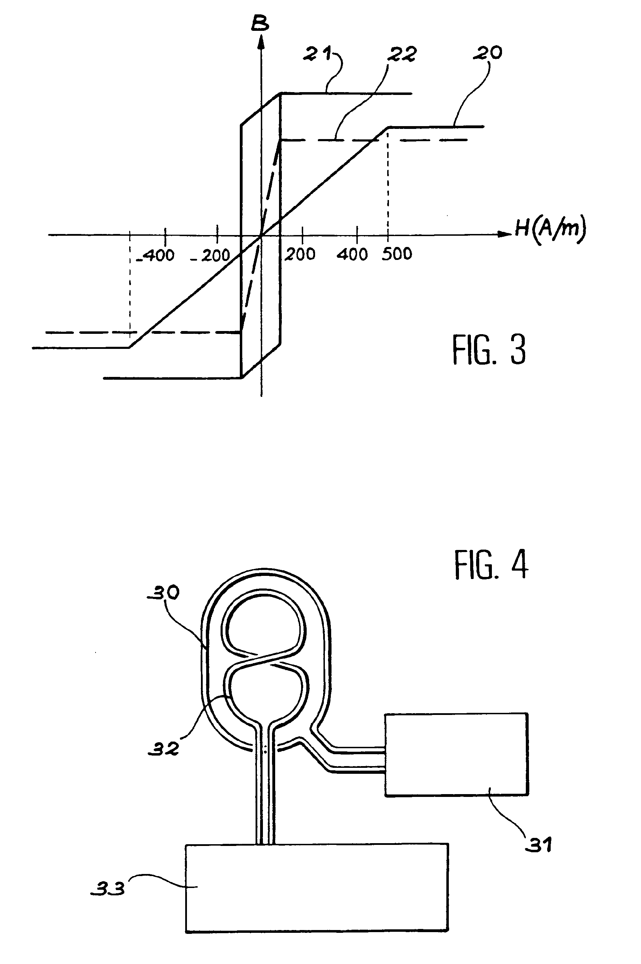

Dans un premier exemple de réalisation, on utilise des filaments ferromagnétiques amorphes gainés de verre obtenu par étirage d'un tube de verre rempli de métal fondu. Le coeur ferromagnétique a un diamètre d'environ 8 µm, et l'écorce de verre une épaisseur d'environ 3 µm. La composition du matériau ferromagnétique est Co68Mn7Si12B13, qui présente une magnétostriction négative, un cycle d'hystérésis linéaire et réversible jusqu'à un champ de saturation, qui est de 500 A/m. L'aimantation à saturation est de 7000 Gauss en S.i. La figure 3 illustre le cycle d'hystérésis 20 d'un tel filament, ainsi que les cycles d'hystérésis 21 et 22 de deux différents marqueurs magnétiques destinés à être détectés par des portiques de surveillance électronique (champ de saturation ≤ 80 A/m).

Un ou plusieurs filaments ferromagnétiques sont assemblés avec un fil textile (coton, soie, fibre synthétique,...) par guipage. Un ou plusieurs de ces fils sont utilisés pour réaliser une ou plusieurs coutures de l'article textile à authentifier.

Le dispositif de détection est constitué de deux premières bobines de 5 cm environ de diamètre, écartées de 5 cm, et alimentées par un courant alternatif à 1 kHz pour obtenir une valeur crête de champ magnétique entre les bobines d'au moins 500 A/m. Deux secondes bobines de détection comportant un grand nombre de tours (1000 tours), sont disposées coaxialement aux premières, et leur signal est traité (par soustraction puis par recherche d'harmoniques élevée), afin de déterminer si un fil magnétique ayant une saturation inférieure ou égale à 500 A/m est présent dans la zone d'interrogation. Si une détection est réalisée, le dispositif de détection diminue alors le niveau de champ, de façon à ne pas dépasser 200 A/m. On vérifie, ainsi, que la détection n'a plus lieu, ce qui indique clairement la présence d'un matériau doux dont le champ de saturation est inférieur à 200 A/m. Ce matériau ne peut donc pas être un marqueur associé à un système de surveillance électronique.

Dans un second exemple de réalisation, on utilise des filaments ferromagnétiques de Co69Fe5Si12B14 d'un diamètre d'environ 4 µm, à coefficient de magnétostriction positif, avec une épaisseur de verre de 6 µm environ. Ce matériau présente un saut de Barkhausen, pour un champ de saturation de 70 A/m. Un fil composite est réalisé à partir de quatre filaments de ce type, et d'un fil textile classique, par guipage. Ce fil composite est utilisé pour réaliser le tissu dont est fait l'étiquette ou le logo de la marque à protéger. La longueur de fil composite guipé présente dans l'étiquette ou le logo est de l'ordre de 4 cm.

Comme illustré sur la figure 4 le dispositif de détection peut comprendre :
- une antenne d'émission boucle unique 30, d'environ 5 cm de diamètre, reliée à un dispositif électronique d'excitation 31, émettant un champ magnétique alternatif de 70 Hz dont la valeur crête est de 120 A/m à l'intérieur de la boucle, cette valeur décroissant rapidement avec la distance,
- une antenne de réception 32, contiguë à l'antenne d'émission 30, constituée par un bobinage en 8, reliée à un dispositif détecteur d'harmoniques élevées 33 : typiquement N x 70 Hz, avec 10<N<100. L'antenne d'émission 30 produit un flux nul sur cette antenne 32. Mais cette antenne 32 est à même de détecter une variation d'induction inhomogène dans la zone sous-jacente, liée par exemple au renversement brutal de l'aimantation d'un marqueur magnétique situé sous ledit dispositif.

De nombreuses variantes des agencements de ces deux types d'antennes 30 et 32 sont bien évidemment possibles.

Ce dispositif de détection fonctionne à 70 Hz, exerce un champ d'au moins 100 A/m dans la zone de détection, et détecte le saut de Barkhausen dans les fils. Il présente un volume de détection de 5 cm x 5 cm x 5 cm environ.

### REFERENCES

[1] US 5 204 526
[2] US 5 921 583
[3] US 5 434 917
[4] US 5 583 333
[5]"Ferromagnetic resonance in amorphous magnetic wires" de S.A. Baranov et al., (Phys. Met. Metall., numéro 1, volume 67, pages 70 à 75, 1989).
[6] "Magnetic hysteresis in glass-covered and water-quenched amorphous wires" de H. Chiriac, T.A. Ovari, M. Vasquez et A. Hernando (Journal of Magnetism and Magnetic Materials 177-181, 1998, pages 205 et 206).
[7] Demande de brevet français 98 06 743 déposée le 28 mai 1998 (FR-A-2 779 266).
[8] WO 98 36393.

## Revendications

1. Système d'authentification d'articles manufacturés (10) munis de marquages magnétiques au moyen d'un dispositif (11) de détection de tels marquages, dans lequel chaque marquage comprend au moins un filament ferromagnétique amorphe (17), de diamètre inférieur à 20 µm muni d'une gaine de verre d'épaisseur inférieure à 10 µm, que chaque article marqué comporte un ou des filaments ferromagnétiques présentant un champ de saturation d'au moins 320 A/m et ayant une masse totale inférieure à 1 mg, et que le dispositif de détection (11) est un dispositif portable d'excitation et de détection de tels filaments ferromagnétiques apte à être tenu à la main pour créer un champ magnétique dans une zone de détection d'un volume compris entre 10⁻³ dm³ et 1 dm³.

2. Système selon la revendication 1, dans lequel le nombre de filaments ferromagnétiques (17) est inférieur à 10.

3. Système selon la revendication 1, dans lequel chaque filament ferromagnétique (17) a une longueur comprise entre 1 cm et 10 cm.

4. Système selon la revendication 1, dans lequel les filaments ferromagnétiques (17) comportent entre 18 et 35% de (Si+B), et du Co ou du Fe à plus de 40%.

5. Système selon la revendication 4, dans lequel les filaments ferromagnétiques (17) comportent les éléments suivants : Ni, Mo, Zr, Ge, Cr, Mn, V, Ti, C avec les teneurs inférieures à 7%.

6. Système selon la revendication 1, dans lequel les filaments ferromagnétiques (17) ont une magnétostriction négative.

7. Système selon la revendication 1, dans lequel les fils (17) ont une magnétostriction positive.

8. Procédé d'authentification d'un article manufacturé (10), dans lequel
- on intègre au moins un filament ferromagnétique (17), de diamètre inférieur à 20 µm muni d'une gaine de verre d'épaisseur inférieure à 10 µm et présentant un champ de saturation d'au moins 320 A/m dans une partie de cet article, la masse totale de filament(s) magnétique(s) étant inférieure à 1 mg,
- on identifie celui-ci au moyen d'un dispositif d'excitation-détection portable (11) tenu à la main, qui crée un champ magnétique dans une zone de détection d'un volume compris entre 10⁻³ dm³ et 1 dm³.

9. Procédé selon la revendication 8, dans lequel le nombre de filaments ferromagnétiques (17) est inférieur à 10.

10. Procédé selon la revendication 8, dans lequel des filaments (17) sont assemblés par tressage, ou piquage.

11. Procédé selon la revendication 8, dans lequel les filaments (17) sont insérés dans une étiquette textile ou dans un logo textile.

12. Procédé selon la revendication 8, dans lequel on insère les filaments (17) par des procédés de couture, piqûre, broderie ou au moment du tissage du tissu.

13. Procédé selon la revendication 8, dans lequel on incorpore les filaments ferromagnétiques (17) dans un fil textile, qui est ensuite utilisé lors de la réalisation du tissu, ou lors d'opérations de couture ou de broderie, ou de surpiqûre.

14. Procédé selon la revendication 8, dans lequel l'authentification est effectuée à quelques centimètres de l'article.

## Claims

1. System for authenticating manufactured articles (10) provided with magnetic markings by means of a device (11) for detecting such markings, in which each marking comprises at least one amorphous ferromagnetic filament (7) with a diameter smaller than 20 µm having a glass sheath with a thickness below 10 µm, each marked article having one or more ferromagnetic filaments with a saturation field of at least 320 A/m and having a total mass below 1 mg and the detection device (11) is a portable device for exciting and detecting such ferromagnetic filaments which can be held in the hand in order to create a magnetic field in a detection area with a volume between 10⁻³ dm³ and 1 dm³.

2. System according to claim 1, wherein the number of ferromagnetic filaments is less than 10.

3. System according to claim 1, wherein each ferromagnetic filament has a length comprised between 1 cm and 10 cm.

4. System according to claim 1, wherein the ferromagnetic filaments comprise between 18 and 35% of (Si+B), and of Co or Fe at more than 40%.

5. System according to claim 4, wherein the ferromagnetic filaments comprise the following elements: Ni, Mo, Zr, Ge, Cr, Mn, V, Ti, C with contents lower than 7%.

6. System according to claim 1, wherein the ferromagnetic filaments have negative magnetostriction.

7. System according to claim 1, wherein the threads have positive magnetostriction.

8. Method for the authentication of a manufactured article (10), wherein
- integration takes place of at least one ferromagnetic filament (17) with a diameter less than 20 µm, equipped with a glass sheath having a thickness below 10 µm and a saturation field of at least 320 A/m in part of said article, the total magnetic filament mass being less than 1 mg,
- identification thereof takes place by means of a portable excitation-detection device (11) held in the hand and which creates a magnetic field in a detection area having a volume between 10⁻³ dm³ and 1 dm³.

9. Method according to claim 8, wherein the number of ferromagnetic filaments is less than 10.

10. Method according to claim 8, wherein the filaments are assembled by plaiting, or by stitching.

11. Method according to claim 8, wherein the filaments are inserted in a textile label or in a textile logo.

12. Method according to claim 8, wherein the filaments are inserted by sewing, stitching or embroidery methods when the fabric is woven.

13. Method according to claim 8, wherein the ferromagnetic filaments are incorporated in a textile thread, which is then used during production of the fabric, or during the operations of sewing or embroidery, or of overstitching.

14. Method according to claim 8, wherein the authentication is carried out at several centimetres from the article.

## Patentansprüche

1. System zur Authentifizierung von mit magnetischen Markierungen ausgestatteten Manufakturartikeln (10) mit Hilfe einer Vorrichtung (11) zur Detektion solcher Markierungen, bei dem jede Markierung wenigstens eine amorphe ferromagnetische Faser (17) umfasst, mit einem Durchmesser unter 20 µm und einem Glasmantel mit einer Dicke unter 10 µm, wobei jeder markierte Artikel eine ferromagnetische Faser oder Fasern mit einem Sättigungsfeld von wenigstens 320 A/m und einer Gesamtmasse von weniger als 1 mg umfasst und die Detektionsvorrichtung (11) eine tragbare Erregungs- und Detektionsvorrichtung solcher ferromagnetischen Fasern ist, die in der Hand gehalten werden kann, um in einer Detektionszone eines zwischen 10⁻³ dm³ und 1 dm³ enthaltenen Raumvolumens ein magnetisches Feld zu erzeugen.

2. System nach Anspruch 1, bei dem die Anzahl der ferromagnetischen Fasern (17) unter 10 liegt.

3. System nach Anspruch 1, bei dem jede ferromagnetische Faser (17) eine zwischen 1 cm und 10 cm enthaltene Länge hat.

4. System nach Anspruch 1, bei dem die ferromagnetischen Fasern (17) zwischen 18 und 35 % (Si+B) und mehr als 40 % Co oder Fe enthalten.

5. System nach Anspruch 4, bei dem die ferromagnetischen Fasern (17) die folgenden Elemente mit Gehalten unter 7 % enthalten: Ni, Mo, Zr, Ge, Cr, Mn, V, Ti, C.

6. System nach Anspruch 1, bei dem die ferromagnetischen Fasern (17) eine negative Magnetostriktion aufweisen.

7. System nach Anspruch 1, bei dem die ferromagnetischen Fasern (17) eine positive Magnetostriktion aufweisen.

8. Verfahren zur Authentifizierung eines Manufakturartikels (10), bei dem
- man wenigstens eine ferromagnetische Faser (17) mit einem Durchmesser unter 20 µm, einem Glasmantel mit einer Dicke unter 10 µm und einem Sättigungsfeld von wenigstens 320 A/m in einen Teil dieses Artikels integriert, wobei die Gesamtmasse der ferromagnetischen Faser(n) weniger als 1 mg beträgt,
- man diese Faser(n) identifiziert mit Hilfe einer tragbaren, in der Hand gehaltenen Detektionsvorrichtung (11), die in einer Detektionszone mit einem zwischen 10⁻³ dm³ und 1 dm³ enthaltenen Raumvolumen ein magnetisches Feld erzeugt.

9. Verfahren nach Anspruch 8, bei dem die Anzahl der ferromagnetischen Fasern (17) unter 10 liegt.

10. Verfahren nach Anspruch 8, bei dem die Fasern (17) durch Flechten oder Nähen verbunden werden.

11. Verfahren nach Anspruch 8, bei dem die Fasern (17) in ein Textiletikett oder ein Textillogo eingearbeitet werden.

12. Verfahren nach Anspruch 8, bei dem die Fasern (17) durch Näh-, Stich-(piqûre), Stickverfahren oder während des Webens des Gewebes eingearbeitet werden.

13. Verfahren nach Anspruch 8, bei dem man die ferromagnetischen Fasern (17) in einen Textilfaden integriert, der anschließend bei der Realisierung des Gewebes oder bei Näh- oder Stick- oder Übersticharbeiten (surpiqûre) verwendet wird.

14. Verfahren nach Anspruch 8, bei dem die Authentifizierung einige Zentimeter vom Artikel entfernt erfolgt.
